# EUROPEAN PATENT SPECIFICATION

(11) **EP 4 181 350 B1**
(45) Date of publication and mention of the grant of the patent: **11.12.2024**
(21) Application number: 21383029.2
(22) Date of filing: 12.11.2021
(51) Int. Cl.: H02J 7/35, H01J 11/00, H01J 3/38, H02J 9/06

(54) **CHARGING ARRANGEMENT FOR SOLAR TRACKER**
LADEANORDNUNG FÜR SOLARVERFOLGER
AGENCEMENT DE CHARGEMENT DE SUIVEUR SOLAIRE

(43) Date of publication of application: 17.05.2023
(73) Proprietor: Soltec Innovations, S.L., 30500 Molina de Segura (ES)
(72) Inventor: Gracia Inglés, José Ángel, 30710 Los Alcázares (ES); Villarejo Mañas, Jose Antonio, 30203 Cartagena (ES); Fernández Luque, Francisco Jesús, 30201 Cartagena (ES)
(74) Representative: Isern Patentes y Marcas S.L.

(56) References cited:
- EP-A1- 3 442 116
- EP-A1- 3 514 911
- EP-A1- 3 793 054
- EP-A2- 2 621 047
- US-A1- 2016 308 488

## Description

### OBJECT OF THE INVENTION

The invention hereby provided belongs to the field of conversion of solar energy into electrical power by means of photovoltaic technologies.

More precisely, the object of the invention is directed to a solution aimed at power and charging of rechargeable batteries feeding solar tracker controllers through connection to a series-connected set of solar cells, solar panels, or modules (hereinafter string/s) in solar fields.

### BACKGROUND

There are auxiliary systems in photovoltaic installations that need to be powered. Suppose you have a generator formed by parallel association of "n" strings of photovoltaic panels, each of these strings will be formed by "m" panels connected in series. Clearly the power of the generator is much higher than that needed by the auxiliary "load", so it seems that there would be multiple ways to obtain the necessary energy from the photovoltaic generator itself and store it in batteries, for its operation in the absence of sun.

One of the possible ways is to use a power supply connected in series in one of the chains. One of the main advantages of this configuration is that there will always be a possible connection point close to the load and therefore the wiring will be very simple. A 40W auxiliary load on a string with a current of 10 amps means a voltage drop of 4 volts.

Expandable current input range by using modules that connect to the master board. The main advantage is being able to use a modular design to be able to adapt to different levels of string current. This modularity allows that the electronics are not oversized (the price is reduced) in cases where the string current is low and that its range is expandable in cases where the string current is high, always adapting the electronics to the specific case of string current in a simple way and saving costs.

Besides, this configuration allows working with extremely high inrush currents, difficult to tackle with a single stage.

In previous developments (single stage), the control of the output voltage was carried out by directly adjusting the duty cycle, considering that the input was a current source and that with an appropriate filtering, the ripple and oscillations of the voltage could be eliminated. that the photovoltaic system "saw". There was no input voltage control loop. However, when approaching a "multistage" design, a stable input voltage is necessary to ensure a good current distribution between the different stages.

This voltage drop is negligible from the point of view of the energy capture of the generator, especially at voltages close to 1000V. However, this power system can only work while the generator is supplying power. In a grid-connected installation only while the inverter is running. This has a problem, during the start-up of the installation or during prolonged maintenance shutdowns the batteries can discharge, and the system may be inoperative, even though the generator is fully available to extract the necessary energy.

On the other hand, if you try to obtain the necessary energy by charging the battery from the parallel connection of a panel, this will only work if the generator does not supply power to the main system. In an installation connected to the grid, as soon as the inverter starts and current begins to flow through the generator, the energy provided by the panel used to charge the battery will be lost. The current used to charge the battery will have the same effect as a shadow on the panel and the bypass diodes on the panel will go into conduction. While the installation is stopped, the battery can be charged without problems from the panel, unlike in the source connected in series. Although it would also have the problem that when "stealing" a panel from the installation, the chain would be unbalanced with respect to its neighbours and it would be possible for reverse currents to be produced by the chain, acting as load and the adjacent chains as sources. If the passage of a reverse current through the chain is prolonged in time, it could cause damage to the photovoltaic panels.

EP3514911A1 discloses photovoltaic system or installation, for generating electricity, which includes auxiliary charging modules for each solar tracker of the photovoltaic system to charge or supply energy to an auxiliary power supply device such as a battery, in order to power the photovoltaic system during the initial stages of the set-up process of the electric energy generation plant or during incidences in the normal operation of the photovoltaic system or installation. The solution presented by EP3514911A1 requires the removal (steal) of a panel from the string, producing imbalances and originating reverse currents. This causes the panel mode circuitry to have to withstand the panel current apart from the reverse current, which required oversizing said circuitry above the maximum current of the panel-panels of the installation.

WO 2017/174829 A1 wherein the installation generates a direct current (DC) through the use of a plurality of electric generators, such as photovoltaic panels (PV1 ... PVn) connected in series, which then supplies the DC electricity generated to an auxiliary power supply device (D) wherein said auxiliary power supply device (D) powers an auxiliary device (E), wherein said auxiliary device (E) may be a battery, a tracker controller for solar trackers (which comprise one or more photovoltaic panels) of a solar park or installation. Furthermore, the auxiliary power supply device (D) comprises a DC power converter (CP) which allow the voltage to be outputted to be adjusted according to the battery or other auxiliary device (E) it must then supply. However, this configuration is limited since it only allows the electric generators (PV panels) to be connected in series to the auxiliary power supply device (D), unlike the invention herein disclosed.

Thus, there is a need of a topology that in a straightforward way allows the coexistence of the two power supply systems and that does not require special control actions for the selection of one or the other option, improving and enhancing the solutions earlier proposed.

### DESCRIPTION

The main advantage of the object of the invention is that, unlike the prior art solutions, it can charge the battery even though no current flows through the string, since it has an auxiliary charger that uses a single panel to obtain energy. The present invention is defined by the independent claim 1 and a further embodiment is defined by the dependent claim 2.

The panel mode of the present invention does not require compromising a panel from the string, so there are no imbalances and reverse currents do not originate. This fact in turn caused the panel mode circuitry to have to withstand the panel current apart from the reverse current, which required oversizing said circuitry above the maximum current of the panel-panels of the installation. The main advantage over using a charger with a dedicated panel is that it does not need a dedicated panel exclusively for the charger but uses the solar installation's own panels to obtain a small percentage of energy (which does not affect the installation) to charge the battery and therefore save on costs.

Contrary to the known solutions in the art where a converter is arranged in parallel the object of the invention avoids this arrangement because under normal closed string conditions, said solution based in a parallel arrangement would not let that panel yield its maximum power output and would take its string out of the maximum power point, generating losses in the installation.

The object of the invention provides a first power converter (connected in series with the string): when the circuit is closed, it passes all the current of the string through it (in series), and retrieves at least part of the power that passes to the rechargeable battery with an isolated battery charger adapting I and V to those of the rechargable battery/ies; and a second power converter (connected in parallel with one of the solar panels) in such a way that once the circuit is opened, since no current flows through the string, the first converter cannot work and shuts down, then the second power converter is the one that goes on to supply the isolated battery charger which is a third power converter since the diode does not block its output (that of the second converter) as the converter is not booted, so that since it connects in parallel with the panel, it does not receive all the current I from that panel, and only demands a certain portion of energy (for example 15 W) of power from the panel, so that in open string conditions, the voltage (V) of that panel does not fall so much with respect to its adjacent ones, and that imbalance is not caused. Why not always put a single converter in parallel as in some known solutions? Because in normal closed string conditions, it would not let that panel give the maximum and would take the string of its own from the point of maximum power, generating losses in the installation.

### DRAWINGS

To complement the description being made and to aid towards a better understanding of the characteristics of the invention, in accordance with a preferred example of practical embodiment thereof, a set of drawings is attached as an integral part of said description wherein, with illustrative and non-limiting character, the following has been represented:

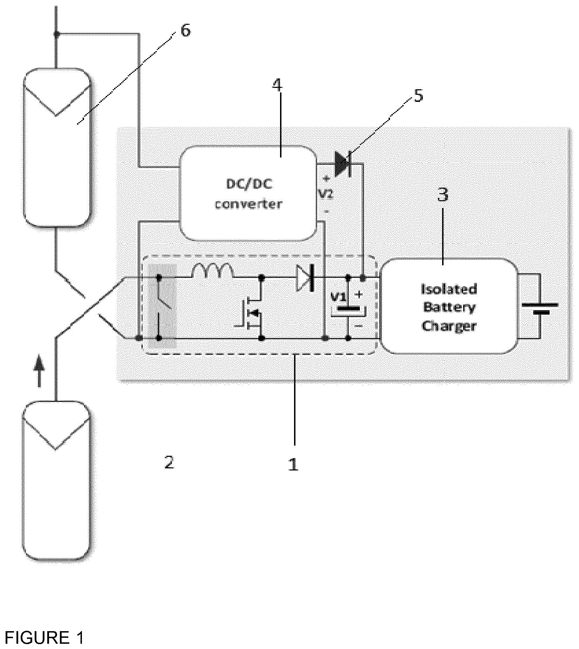

Figure 1.- Depicts a proposed scheme diagram. Showing the current-fed converter (serial source); protection to avoid leaving the generator in open circuit; Isolated battery charger; DC-DC converter powered from the panel; diode for parallel connection of the power sources and the solar panels.

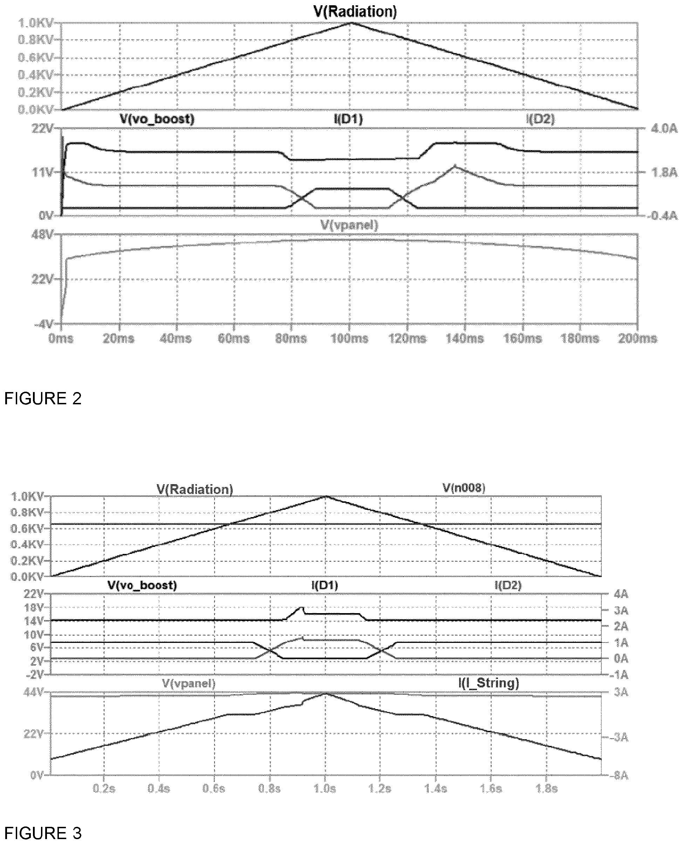

Figure 2.- Shows a representation of Vo_boost, voltage at the output of the series source, I (D1) current provided by the source connected to the panel, I (D2) current provided by the series source, V (Vpanel) voltage of the panel where the series source is connected, V (radiation) simulates a variation of radiation in the rest of the installation while the chain with the power system is at 1000 *w* / *m*².
Figure 3.- Shows a representation of Vo_boost, voltage at the output of the series source, I (D1) current provided by the source connected to the panel, I (D2) current provided by the series source, V (Vpanel) voltage of the panel where the series source is connected, V (radiation) simulates a variation of radiation in the chain where the power system is while the rest of the generator is at 650 *w* / *m*²). V (n008) represents the voltage of the rest of the generator (1V equals *w* / *m*²).

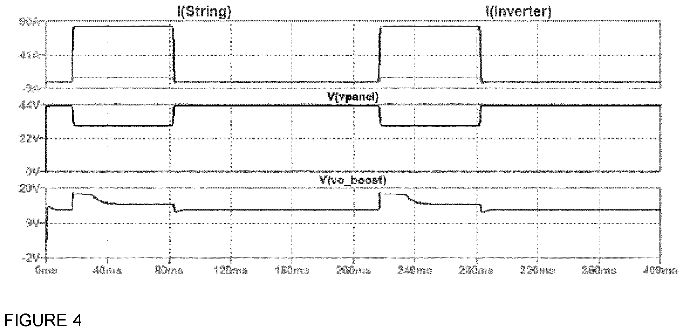

Figure 4.- Shows a representation of V (Vo_boost) voltage at the point of parallel connection of the sources.

### DETAILED DESCRIPTION

In the invention depicted in figure 1, it is provided a current-fed power converter connected in series to the string and comprising a protection (2) configured to prevent an open circuit; being said current-fed power converter a first power converter (1) providing a first constant voltage (V1) at its output when it is working and a second power converter (4) which is fed by at least one solar panel (6) and being configured to provide a second constant voltage (V2) lower than the first constant voltage (V1) at its output.

So that said first power converter (1), when the circuit is closed, passes all the current of the string through it (in series), and retrieves at least part of the power that passes to a rechargeable battery through a isolated battery charger (3) adapting I and V; and a second power converter (4)connected in parallel with one of the solar panels in such a way that once the circuit is opened, since no current flows through the string, the first converter (1) cannot work and shuts down, then a second power converter (4) is the one that goes on to supply the isolated battery charger (3) since a diode (5), configured to control flows, does not block its output.

If an overvoltage is detected at the input of the first power converter (1) connected in series with the string, a protection (2) may be arranged to prevent a string from being in an open circuit, the second power converter (4) which is fed by at least one solar panel (6) and being configured to provide a second constant voltage (V2) lower than the first constant voltage (V1) at its output.

In this way, whenever the serial source starts to conduct the second power converter (4) does not feed the isolated battery charger (3) since the diode (5) will be inversely polarized; therefore, that power extracted from the second power converter (4) may be disregarded. An isolated battery charger (3) is fed from the parallel connection of the two power converters (1, 4) and will oversee charging and monitoring at least one of the solar panels (6).

In the invention both power converters (1,4) may be configured to be active depending on whether they feed power to the isolated battery charger (3) they may be configured to remain in a low consumption state since there is no load at their output. As the first constant voltage (V1) is higher than the second constant voltage (V2) if the current-fed power converter (1) is working because current flows through the string, the second constant voltage (V2) is blocked because the diode (5) is polarized in reverse and the first constant voltage (V1) reaches the isolated battery charger (3).

An example of switching between "panel" mode and "serial" source with inverter off is described below.

The generator is not delivering power (inverter off). In this situation, two different scenarios may arise:
1. The installation is free of shadows and most of the chains generate the same tension. In this situation, the current that could flow through the first power converter (1) connected in series with the string is minimal (or even negative), the first constant voltage (V1) cannot reach its target value, therefore power will be fed connected to the solar panel (6).
2. The installation has shadows, but the chain feeding the system is not. If the current supplied by the chain where the feeding system is located reaches a minimum value for the serial source to work, this will be the one that provides the otherwise the power supply from the solar panel (6) will do it.

Fig. 2 shows a very unlikely case where the photovoltaic generator is made up of eleven chains, the chain where the auxiliary power system is located works at constant radiation of 1000 *w* / *m*² while the rest of the installation undergoes a variation of triangular radiation from 0 to 1000 *w* / *m*². As can be seen when the rest of the installation is very shaded, the series source works, since the chain is supplying energy to the rest of the generator, when the current becomes insufficient for the series source to function, the panel source comes into operation.

As depicted in Fig. 3, as the rest of the installation is giving it energy to the chain which is connected to the first power converter (1), the current in the series source is "negative", therefore the second power converter (4) connected in parallel with one of the solar panels (6) works, when enough voltage is reached to supply current to the rest of the installation the first power converter (1) connected in series with the string starts to work.

During the commutations there may be some small overvoltage, so the use of a protector is recommended, in the embodiments hereby disclosed an 18V Zener diode has been used as protection. In this case, it is the Zener that acts to protect the converters output voltage from overvoltage. A Zener diode protection is used to avoid overvoltage at the output of the power converters (1, 4) that sometimes occurs when there is a mode change.

A protection (2) applies when the first power converter (1) breaks down or has a malfunction and is used to prevent the string from remaining open precisely because of this break, interrupting the string current and damaging the installation.

In another example, switching between the first power converter (1) and the second power converter (4) by an inverter connection is provided wherein the inverter (being this inverter the inverter of the solar plant) connection acts as a switch that connects and disconnects a voltage source to the generator. As shown in Fig. 4 while the inverter is disconnected (*I* (*Inverter*) = 0) the output voltage is somewhat lower, therefore it is provided by the solar panel (6).

When working in serial mode, current flows through the string; but when set in panel (parallel) mode, no current flows through the string. This change of mode between working modes can be triggered by:
- A switch off or on of the inverter.
- Also, that the string current is interrupted because there will be the disconnector (switch) of the combiner box.

When the inverter is off, no current flows through the string and then the panel (parallel) working mode is set. When the inverter is on, current flows through the string and therefore the series working mode operates. It can be observed how in those moments the solar panel (6) voltage drops to adapt to the power delivered. When the inverter is on, the series source enters conduction, and the solar panel (6) voltage remains approximately the same value as that of the rest of the solar panels (6).

## Claims

1. Charging arrangement for solar tracker comprising at least one solar panel (6) and rechargeable batteries, the batteries are configured to feed a respective solar tracker controller through connection to a string in solar fields, the string comprising a series-connected set of solar panels and configured to feed a grid or a load, the charging arrangement for solar tracker comprising:
a first power converter (1) with an input and an output, wherein the input is connectable
in series to the string and configured to provide a first constant voltage (V1) at its output when it is working, and comprising a protection (2) configured to prevent an open circuit;
an isolated battery charger (3) configured to charge the rechargeable batteries, the isolated charger (3) comprising an
input and an output, wherein the output is connected to the rechargeable batteries and
the input is connected to the output of the first converter (1), the charging arrangement for solar tracker being **characterised by**:
said first converter (1) being configured to: retrieve at least a part of power coming from the string and deliver it to the isolated battery charger (3), and switch off when there is no current flowing through the string, or switch on when there is current flowing through the string, and
a second power converter (4) being a panel powered power converter, the second power converter(4) comprising an input
and an output, wherein the input is connected in parallel to the at least one solar panel (6) and configured to operate delivering power to the isolated battery charger (3) when the first power converter (1) stops operating, and the output is connected to the output of the first power converter (1);
wherein
the at least one solar panel (6) is connectable in series to the string, the second power converter (4) is further configured to provide a second constant voltage (V2) at its output, being said second constant voltage (V2) lower than the first constant voltage (V1), and
the isolated battery charger (3) being further configured to convert power to feed the rechargeable batteries, said power coming from: the first power converter (1) when there is current flowing through the string, or from the panel powered second power converter (4) when there is no current flowing through the string;
the charging arrangement further comprising a diode (5), the anode of the diode is connected to the output of the second power converter (4) and the cathode of the diode is connected to the output of the first power converter (1) and the input of the isolated battery charger (3), the diode (5) is configured to avoid short circuit when said outputs feed the isolated battery charger (3).

2. Charging arrangement for solar tracker according to the preceding claim wherein the diode (5) is connected with a reverse polarity in respect of the polarity of the current of the output of the second power converter (4).

## Patentansprüche

1. Ladeanordnung für einen Solartracker, die mindestens ein Solarpaneel (6) und aufladbare Batterien umfasst, die Batterien sind dazu ausgelegt, eine jeweilige Solartrackersteuerung über eine Verbindung zu einer Folge in Solarfeldern zu speisen, wobei die Folge einen in Reihe verbundenen Satz von Solarpaneelen umfasst und dazu ausgelegt ist, ein Netz oder eine Last zu speisen, wobei die Ladeanordnung für einen Solartracker Folgendes umfasst:
einen ersten Energiewandler (1) mit einem Eingang und einem Ausgang, wobei der Eingang mit der Folge in Reihe verbindbar und dazu ausgelegt ist, eine erste Konstantspannung (V1) an seinem Ausgang bereitzustellen, wenn er in Betrieb ist, und einen Schutz (2) umfasst, der dazu ausgelegt ist, einen offenen Stromkreis zu verhindern;
ein isoliertes Batterieladegerät (3), das dazu ausgelegt ist, die aufladbaren Batterien zu laden, wobei das isolierte Ladegerät (3) einen Eingang und einen Ausgang umfasst, wobei der Ausgang mit den aufladbaren Batterien verbunden ist und der Eingang mit dem Ausgang des ersten Wandlers (1) verbunden ist, wobei die Ladeanordnung für einen Solartracker **dadurch gekennzeichnet ist, dass**:
der erste Wandler (1) zu Folgendem ausgelegt ist: Abrufen von mindestens einem Teil von Energie, die von der Folge kommt, und Liefern derselben an das isolierte Batterieladegerät (3) und Abschalten, wenn durch die Folge kein Strom fließt, oder Einschalten, wenn durch die Folge Strom fließt, und
einen zweiten Energiewandler (4), bei dem es sich um einen paneelgespeisten Energiewandler handelt, wobei der zweite Energiewandler (4) einen Eingang und einen Ausgang umfasst, wobei der Eingang parallel zu dem mindestens einen Solarpaneel (6) verbunden und dazu ausgelegt ist, das Liefern von Energie an das isolierte Batterieladegerät (3) zu betreiben, wenn der erste Energiewandler (1) seinen Betrieb einstellt, und der Ausgang mit dem Ausgang des ersten Energiewandlers (1) verbunden ist;
wobei
das mindestens eine Solarpaneel (6) mit der Folge in Reihe verbindbar ist,
der zweite Energiewandler (4) ferner dazu ausgelegt ist, eine zweite Konstantspannung (V2) an seinem Ausgang bereitzustellen, wobei die zweite Konstantspannung (V2) niedriger ist als die erste Konstantspannung (V1), und
das isolierte Batterieladegerät (3) ferner dazu ausgelegt ist, Energie umzuwandeln, um die aufladbaren Batterien zu speisen, wobei die Energie von Folgendem kommt: dem ersten Energiewandler (1), wenn durch die Folge Strom fließt, oder vom paneelgespeisten zweiten Energiewandler (4), wenn durch die Folge kein Strom fließt;
wobei die Ladeanordnung ferner eine Diode (5) umfasst, wobei die Anode der Diode mit dem Ausgang des zweiten Energiewandlers (4) verbunden ist und die Katode der Diode mit dem Ausgang des ersten Energiewandlers (1) und dem Eingang des isolierten Batterieladegeräts (3) verbunden ist, wobei die Diode (5) dazu ausgelegt ist, einen Kurzschluss zu vermeiden, wenn die Ausgänge das isolierte Batterieladegerät (3) speisen.

2. Ladeanordnung für einen Solartracker nach dem vorhergehenden Anspruch, wobei die Diode (5) mit Bezug auf die Polarität des Stroms des Ausgangs des zweiten Energiewandlers (4) mit einer umgekehrten Polarität verbunden ist.

## Revendications

1. Agencement de charge pour suiveur solaire comprenant au moins un panneau solaire (6) et des batteries rechargeables, les batteries sont conçues pour alimenter un contrôleur de suiveur solaire respectif à travers une connexion à une chaîne dans des champs solaires, la chaîne comprenant un ensemble de panneaux solaires connectés en série et étant conçue pour alimenter un réseau ou une charge, l'agencement de charge pour suiveur solaire comprenant :
un premier convertisseur de puissance (1) avec une entrée et une sortie, dans lequel l'entrée peut être connectée en série à la chaîne et est conçue pour fournir une première tension constante (V1) à sa sortie pendant son fonctionnement, et comprenant une protection (2) conçue pour empêcher un circuit ouvert ;
un chargeur de batterie isolé (3) conçu pour charger les batteries rechargeables, le chargeur isolé (3) comprenant une entrée et une sortie, dans lequel la sortie est connectée aux batteries rechargeables et l'entrée est connectée à la sortie du premier convertisseur (1), l'agencement de charge pour suiveur solaire étant **caractérisé par** :
ledit premier convertisseur (1) étant conçu pour : récupérer au moins une partie de la puissance provenant de la chaîne et la délivrer au chargeur de batterie isolé (3), et s'éteindre lorsqu'il n'y a pas de courant circulant à travers la chaîne, ou s'allumer lorsqu'il y a du courant circulant à travers la chaîne, et
un second convertisseur de puissance (4) étant un convertisseur de puissance approvisionné par panneau, le second convertisseur de puissance (4) comprenant une entrée et une sortie, dans lequel l'entrée est connectée en parallèle à l'au moins un panneau solaire (6) et conçue pour fonctionner en délivrant de la puissance au chargeur de batterie isolé (3) lorsque le premier convertisseur de puissance (1) cesse de fonctionner, et la sortie est connectée à la sortie du premier convertisseur de puissance (1) ;
dans lequel
l'au moins un panneau solaire (6) peut être connecté en série à la chaîne,
le second convertisseur de puissance (4) est en outre conçu pour fournir une seconde tension constante (V2) à sa sortie, ladite seconde tension constante (V2) étant inférieure à la première tension constante (V1), et
le chargeur de batterie isolé (3) étant en outre conçu pour convertir de la puissance pour alimenter les batteries rechargeables, ladite puissance provenant : du premier convertisseur de puissance (1) lorsqu'il y a du courant circulant à travers la chaîne, ou du second convertisseur de puissance (4) approvisionné par panneau lorsqu'il n'y a pas de courant circulant à travers la chaîne ;
l'agencement de charge comprenant en outre une diode (5), l'anode de la diode est connectée à la sortie du second convertisseur de puissance (4) et la cathode de la diode est connectée à la sortie du premier convertisseur de puissance (1) et à l'entrée du chargeur de batterie isolé (3), la diode (5) est conçue pour éviter un court-circuit lorsque lesdites sorties alimentent le chargeur de batterie isolé (3).

2. Agencement de charge pour suiveur solaire selon la revendication précédente dans lequel la diode (5) est connectée avec une polarité inverse par rapport à la polarité du courant de la sortie du second convertisseur de puissance (4).
